# EUROPEAN PATENT APPLICATION

(11) **EP 4 422 092 A1**
(43) Date of publication of application: **28.08.2024**
(21) Application number: 23275028.1
(22) Date of filing: 22.02.2023
(51) Int. Cl.: H04B 13/02, H04B 10/11, H04J 14/02

(54) **WAVELENGTH DIVISION MULTIPLEXED SUBMARINE OPTICAL COMMUNICATIONS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An optical communication system 100 is configured to provide optical communication between a transmitter 200 and a receiver 300. The transmitter 200 is configured to transmit a multiplexed optical signal 235. The transmitter 200 includes at least one optical signal generator 210 configured to generate at least one optical signal 215, a modulator 220 configured to encode data onto the at least one optical signal 215, and a multiplexer 230 configured to combine the at least one optical signal 215 into a multiplexed optical signal 235. A receiver 300 is configured to receive a multiplexed optical signal 390. The receiver 300 comprises a de-multiplexer 330 configured to separate the received multiplexed optical signal 390 into at least one optical signal 335, an opto-electronic element 370 configured to convert the at least one optical signal 335 into at least one electrical signal, and a de-modulator 320 configured to decode the at least one electrical signal. At least one of the transmitter 200 and receiver 300 are configured to be operated under water. Also described herein is a system 100 comprising the transmitter 200 and receiver 300 apparatuses, and methods of transmitting 400 and receiving 500 an optical signal, for example, using the transmitter 200 and receiver 300 apparatuses.

## Description

### FIELD

The present invention relates to transmitter and receiver apparatuses and methods of use thereof. The transmitter-receiver system provides an optical signal communication link. This communication method may be applied between an aircraft and a submersible vehicle; a submersible vehicle and an aircraft; and between at least two submersible vehicles. This technology has the capability to improve the capacity and reliability of aircraft-to-submarine, submarine-to-aircraft, submarine-to-submarine, aircraft-to-aircraft, and aircraft-to-ground optical communications links.

### BACKGROUND

Aircraft-to-submarine, submarine-to-aircraft, and submarine-to-submarine communications are difficult and traditionally use wavelengths in the radio frequency (RF) domain. The bandwidth of these signals is limited by the carrier bandwidth of the RF signal used. The bandwidth may be further limited by the amount of crosstalk that occurs between signals utilising the same or substantially similar RF bands. Such bandwidth limitations restrict the amount of information that can be transferred between an aircraft and a submarine, a submarine and an aircraft, or between nearby submarines.

Underwater radio frequency (RF) communication links are not capable of transmitting information except at very low frequencies, for example, 3 - 30 Hz. At this low frequency, bandwidth is limited to approximately 50 bits per second (bps), thereby restricting the speed at which data packets can be sent or received. Current systems suffer from signal stretching since the RF pulses are scattered by surrounding water medium or water droplets within the atmosphere, and other scatterers such as clouds. This signal stretching limits the data rate that can be achieved with these systems.

Communication across the air-water interface is reliant on a submarine raising an antenna through the surface of the body of water or move closer to the surface of the body of water. In both cases, the covertness of the submarine may be significantly reduced, thereby making the vehicle more vulnerable to hostile actors which is not desirable. Furthermore, the vessel may be required to limit its speed while establishing a communications link and transferring data, thereby introducing additional vulnerabilities that could be taken advantage of by hostile actors.

In addition, RF signals pose a higher risk of being intercepted or jammed, thereby reducing the effectiveness or covertness of the information being transmitted. Optical communications provide an alternative communication method which does not suffer from the same limitations because the signal footprint can be restricted and because the carrier frequency is approximately three orders of magnitude higher than an equivalent RF signal.

Recently, optical communications technologies suitable for submarine-to-submarine communication have been developed. For example, the Sonardyne Bluecomm 200 system. This system utilises an array of high-power light-emitting diodes (LEDs) that are modulated to transmit data. The transmitted data is received by a photomultiplier tube. The Bluecomm system is quoted as being capable of providing communication over distances of up to 150 metres, with a claimed data transfer rate of 2.5 - 10 Mbps. Such optical-based communication systems are being developed to provide communication links. These communications links may be capable of being used to establish communications between a submarine and above-water assets, such as aircraft or satellites.

Hence, there is a need to improve upon current submarine communication systems to increase the security, bandwidth, and reliability of communications.

### SUMMARY

Optical fibre communications technologies have been developed to multiplex multiple different wavelengths together in parallel. Wavelength division multiplexing (WDM) is a technique that allows each wavelength to be configured to carry a different piece of information. This approach allows an overall bandwidth total to the sum of the bandwidths available for each of the individual wavelength channels. The individual channels can then be multiplexed onto a single fibre optic cable via a dispersive element. A dispersive element may be an arrayed waveguide grating or a simple fibre coupler. Many of the components for 1.5µm WDM systems already exist for optical fibre communications.

At a receiver, each of the wavelength channels may be de-multiplexed in a similar way. De-multiplexing the received optical signal may require the use of suitable optical filters to avoid crosstalk between the different wavelengths comprised within the multiplexed optical signal. The de-multiplexed wavelengths may further require focusing onto separate photodiodes for opto-electronic conversion.

Each of the multiple channels possesses a different wavelength. The individual wavelength channels must be sufficiently separated to prevent crosstalk upon being received by the receiver. This separation may be, for example, 100GHz. Each wavelength channel is individually modulated so that they may each carry a different piece of information or data. This effectively increases the overall bandwidth of the communication link. This may allow faster transfer of data packets, the transfer of larger data packets, and improved reliability of the communication link. The use of a narrow beam with multiple wavelengths may further reduce the likelihood of successful signal jamming. In some cases, multiple channels may be configured to carry the same piece of information or data for the sake of redundancy. The multiplexed wavelength channels are then separated at the receiver. This may be achieved using couplers which are configured to split the combined energy using filters configured to separate the individual wavelengths. Alternatively, the separation may be achieved using dispersive elements, such as arrayed waveguide gratings. These are configured to spatially separate and filter the individual wavelengths in one device and reduce loss of signal power.

Each of the separated wavelengths may then be received by a separate opto-electronic converter to convert the optical signal into an electrical signal. The converted electrical signal is then demodulated to generate the information or data sent by the transmitter. Higher levels of the open systems interconnection (OSI) stack break down the data into individual wavelength channels and reassemble it at the receiver. It may also be possible to vary the bit rate on individual channels to deal with varying conditions and the achievable bandwidth. This may be necessary when an individual optical signal generator, such as a laser, ages and its power drops. Reductions in signal power may also be attributed to the local water medium through which the signal is being transferred. In such cases, it may be necessary to change the bandwidth.

Power amplification of the multiplexed optical signal may be applied prior to transmission to provide power for the link budget. Similarly, pre-amplification may be applied upon receiving the transmitted multiplexed optical signal. It is possible for the multiplexed wavelengths to be individually amplified by the same amplifying device. The amplifier may use fibre amplifiers such as the Erbium-doped fibre amplifier (EDFA) for 1.5 µm and Ytterbium-doped fibre amplifier (YDFA).

According to a first aspect of the present invention, an optical communications system is provided comprising a transmitter and a receiver. The transmitter includes an optical signal generator configured to generate at least one optical signal. The transmitter further comprises a modulator, configured to encode data onto the at least one optical signal. The transmitter further comprises a multiplexer, configured to combine the at least one optical signal into a multiplexed optical signal. The receiver comprises a de-multiplexer, configured to separate the received multiplexed optical signal into at least one optical signal. The receiver may further comprise an opto-electronic element, configured to convert the at least one optical signal into at least one electrical signal. The receiver may further comprise a de-modulator, configured to decode the at least one electrical signal. At least one of the transmitter and receiver are configured to be operated underwater. In some cases, either both or neither of the transmitter and receiver may be configured to work under water, the skilled person will appreciate that the application of the system would determine the arrangement required. The system may comprise at least one and at least one submarine. The system may alternatively use a different underwater platform, such as an unmanned drone vessel, a fixed underwater platform, a sensor node, and the like. The system may further comprise at least one aircraft. The transmitter may be coupled to the at least one aircraft and the receiver may be coupled to the at least one submarine, wherein the at least one aircraft and at least one submarine may be configured to be in optical communication with each other. The transmitter may be coupled to the at least one submarine and the receiver may be coupled to the at least one aircraft, wherein the at least one submarine and at least one aircraft may be configured to be in optical communication with each other. The at least one aircraft and the at least one submarine may both comprise a transmitter and a receiver, thereby allowing two-way communication optical. The multiplexed optical signal may be configured to break the air-water interface upon transmission between the at least one aircraft and at least one submarine. A first submarine and a second submarine may each comprise a transmitter and receiver, and be configured to be in optical communication with each other while remaining submerged. At least one of a first and second submarines may comprise an underwater drone, and the underwater drone may be configured to extend the range of optical communication between the first and second submarines. The optical signal may comprise an infrared laser signal with a wavelength substantially between 300 nm to 10 µm, more preferably 300 nm to 600 nm for signal transfer through water. In another configuration, the underwater drone may be replaced with a un unscrewed platform.

According to a second aspect present invention is a method of transmitting an optical signal passed along a path wherein at least a portion of the path comprises a liquid medium. The method comprises the step of generating at least one optical signal. The method further comprises the step of modulating the at least one optical signal. The method further comprises the step of multiplexing the at least one optical signal to generate a multiplexed optical signal. The method further comprises the step of transmitting the multiplexed optical signal through free space to a receiver. The multiplexed optical signal may be transmitted from a satellite in an orbit, and airborne platform, or an underwater platform, to be received by a ground station receiver, whereby the signal passes through free space from the transmitter to the receiver. The at least one optical signal may be at least one laser signal. The at least one laser signal may be an infrared laser signal with a wavelength substantially between 300 nm to 10 µm, more preferably 300 nm to 600 nm for signal transfer through water. The method may further comprise the step of conditioning and directing the multiplexed optical signal. The method may further comprise the step of amplifying the multiplexed optical signal.

According to a third aspect of the present invention is a method of receiving an optical signal passed along a path wherein at least a portion of the path comprises a liquid medium. The method comprises the steps of receiving a multiplexed optical signal, de-multiplexing the optical signal into at least one optical signal, de-modulating the at least one optical signal, and converting the at least one optical signal into at least one electrical signal. The method may comprise the step of modifying the received optical signal to account for at least one of the turbidity, salinity, and temperature of the liquid medium. The method may further comprise the step of modifying the received optical signal to account for scattering effects at an air-water interface. A signal may be transmitted and the returning scattered signal analysed to determine local underwater conditions. The method may apply low bit rate data transfer and alter this based on the local underwater conditions. The method may further comprise the step focusing the received multiplexed optical signal prior to being de-multiplexed. The method may further comprise the step of amplifying the received multiplexed optical signal. The method may comprise passing the at least one de-multiplexed optical signal through an optical filter. The at least one optical signal may be an infrared laser signal with a wavelength substantially between 300 nm to 10 µm, more preferably 300 nm to 600 nm for signal transfer through water.

### BRIEF DESCRIPTION OF THE FIGURES

Embodiments of the invention will now be described by way of example only with reference to the figures, in which:
Figure 1 shows a schematic of aircraft-to-submarine, submarine-to-aircraft, and submarine-to-submarine optical communication link, according to an embodiment the invention;
Figure 2 is a block diagram of an example embodiment of a transmitter;
Figure 3 is a block diagram of an example embodiment of a receiver;
Figure 4 is a flowchart for a method of transmitting an optical signal, according to an embodiment of the present invention; and
Figure 5 is a flowchart for a method of receiving an optical signal, according to an embodiment of the present invention.

### DETAILED DESCRIPTION

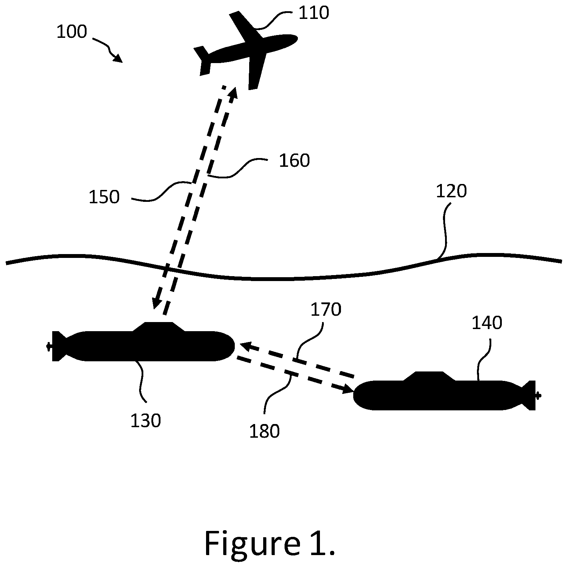

Figure 1 shows a schematic of an optical communication system 100. The optical communication system 100 may provide aircraft-to-submarine, and submarine-to-submarine optical communications. It will be appreciated by the skilled person that the submarine-to-aircraft arrangement is simply an inversion of the aircraft-to-submarine arrangement discussed herein. The skilled person will further appreciate that this system may also be applied in aircraft-to-aircraft communication using substantially similar apparatuses and methods as are disclosed herein. The system 100 may be suitable for providing a communication link between a satellite and an aircraft or submarine, and vice versa. This arrangement may also be suitable for providing communication between a satellite and a submarine, and vice versa.

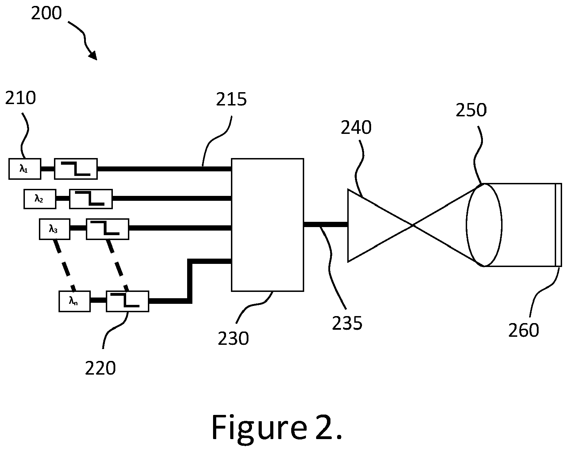

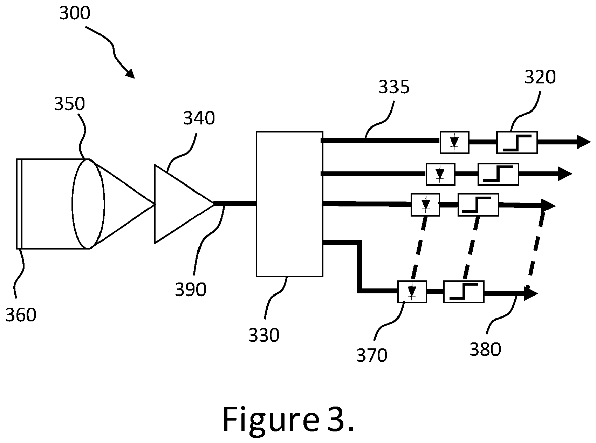

An optical communication system 100 comprises a transmitter 200 and a receiver apparatus 300. These will be described in more detail below, with reference to Figures 2 and 3. The transmitter 200 may be configured to transmit an optical signal 150 to a receiver apparatus 300. The receiver 300 may be configured to receive an optical signal 150. The optical signal 150 may be a multiplexed optical signal. The optical signal may be passed along a path extending from the transmitter 200 to the receiver 300. At least a portion of the path may comprise a liquid medium. The liquid medium may be water. The size of the portion of the path comprising a liquid medium may vary depending on the depth at which the signal is transmitted or received. The size of the portion of the path comprising a liquid medium may also be dependent on the zenith angle between the transmitter and receiver. Alternatively, the entire path of the transmitted signal may be through a liquid medium, for example, where an optical signal is being passed between at least two submerged vehicles.

The system 100 may comprise at least one submarine 130. The system 100 may further comprise at least one aircraft 110. The at least one aircraft 110 may comprise a transmitter 200, configured to transmit an optical signal to a receiver 300. The at least one submarine 130 may comprise a receiver 300, configured to receive an optical signal from the transmitter apparatus 200. In other words, the at least one aircraft and at least one submarine may be in optical communication with each other.

In a similar arrangement, the at least one submarine 130 may comprise a transmitter 200, configured to transmit an optical signal to a receiver 300. The at least one aircraft 110 may comprise a receiver 300, configured to receive an optical signal from a transmitter 200. In other words, the at least one aircraft and at least one submarine may be in optical communication with each other.

In another arrangement, the at least one aircraft 110 may comprise both a transmitter 200 and a receiver 300, thereby allowing the at least one aircraft to both transmit and receive optical signals. The at least one submarine 130 may comprise both a transmitter 200 and a receiver 300, thereby allowing the at least one submarine 130 to both transmit and receive optical signals. In other words, the at least one aircraft and at least one submarine may be in two-way optical communication with each other. In any of the cases outlined above involving at least one aircraft and at least one submarine, the multiplexed optical signal may be configured to break the air-water interface 120 upon transmission between the at least one aircraft and the at least one submarine.

In another example, the system 100 may include a first submarine 130 and a second submarine 140. The first submarine may comprise a transmitter apparatus 200, and the second submarine 140 may comprise a receiver 300. Alternatively, the first submarine 130 may comprise a receiver 300, and the second submarine 140 may comprise a transmitter 200. In these arrangements, the first and second submarines 130, 140 may be in one-way communication with each other. The system 100 may allow for asymmetrical communication links to be set up. For example, the uplink from the at least one submarine 130 to the at least one aircraft 110 may be purely for the management of the link, thereby requiring a low data rate. Meanwhile, the downlink from the aircraft 110 to the at least one submarine 130 may contain more data to provide the submarine with information relevant to situational awareness. In this case, the uplink cost may be reduced by fitting fewer wavelength channels to the at least one submarine 130.

In another example, each of the first and second submarines 130, 140 may comprise both a transmitter 200 and a receiver 300. In other words, the first and second submarines 130, 140 may be in two-way communication with each other. A similar arrangement may be provided to allow two-way communication between a first aircraft and a second aircraft. Of course, this example is not limited to two vehicles and may be applied to a plurality of vehicles.

In a further example, the system 100 may comprise a first submarine 130 and a second submarine 140. The first submarine 130 may be configured to receive an optical signal 170 from a second submarine 110. The first submarine 130 may then be configured to re-transmit the received optical signal 170 to an aircraft 110 using the apparatuses and methods disclosed herein.

In another example, at least one of the first and second submarines 130, 140 may comprise an underwater drone. The underwater drone may be a small controllable submersible vehicle capable of leaving the parent vessel. The underwater drone may remain connected to the parent vessel via an umbilical. In an alternative embodiment, the underwater drone may be wirelessly connected to the parent vessel. In another embodiment, the underwater drone may only transfer received data upon docking with the parent vessel. The drone may be configured to extend the range of optical communications between the first and second submarines 130, 140.

The at least one optical signal used by the system may be an infrared laser signal with a wavelength substantially between 300 nm to 10 µm, more preferably 300 nm to 600 nm for signal transfer through water. The specific wavelength or wavelength range used may be altered depending on the conditions of the local liquid medium through which the signal is to be passed.

The multiplexed optical signal 150, 160, 170, 180 may be pointed in the general direction of a receiver 300 within a critical tolerance. However, perfect alignment of the transmitter 200 and receiver 300 may not be essential for effective communication, since the various media (air and/or water) causes the signal beam to scatter, thereby spreading it.

In any of the arrangements disclosed herein, the transmitter 200 may be directed towards receiver 300 and configured to track the receiver 300 to ensure that a stable communications link is maintained. Similarly, a receiver 300 may be configured to track a transmitter 200.

Figure 2 is a block diagram of a transmitter apparatus 200. The transmitter 200 is configured to transmit an optical signal 150, 160, 170, 180. The optical signal 150, 160, 170, 180 may be a multiplexed optical signal.

The transmitter 200 comprises an optical signal generator 210 configured to generate at least one optical signal 215. In cases where more than one optical signal 215-1, 215-2... 215-n is generated, each optical signal 215 may comprise a different wavelength λ_{1,} λ_{2...} λₙ , wherein each wavelength λ_{1,} λ_{2...} λₙ is separated by an appropriate amount to prevent crosstalk or unwanted interference. The optical signal generator 210 may be a laser generator configured to generate at least one laser signal. In cases where more than one laser signal is generated, each laser signal may comprise a different wavelength λ_{1,} λ_{2...} λₙ, wherein each wavelength λ_{1,} λ_{2...} λₙ is separated by an appropriate bandwidth to prevent crosstalk or unwanted interference. The at least one laser signal may be an infrared laser signal with a wavelength substantially between 300 nm to 10 µm, more preferably 300 nm to 600 nm for signal transfer through water. The transmitter 200 may comprise multiple optical signal generators 210-1, 210-2... 210-n configured to provide optical signals 215-1, 215-2... 215-n corresponding to different wavelengths or different wavelength ranges. The wavelengths λ_{1,} λ_{2...} λₙ used may be based on a number of factors, including wavelength range, stability, power, coherence length, amplifier wavelength range, and the like. The wavelength or wavelength range used may be dependent on the turbidity of the water through which the optical signal is passed.

The transmitter 200 further includes a modulator 220 configured to encode data onto the generated at least one optical signal. The modulation format may be an on-off keying format wherein the power of the at least one optical signal is blocked or allowed to pass to present a 0 or a 1, or vice versa. Those skilled in the art will appreciate that this is one example of a modulation technique and that various other techniques be employed to achieve the same or a substantially similar result. Other such examples may include pulse position modulation and phase modulation. Modulation may be applied to the least one optical signal directly, for example, by modulating the current of the at least one optical signal generator. Alternatively, modulation may be applied to the at least one optical signal indirectly, for example, by transmission through an opto-electronic element such as a lithium niobate interferometer. The combination of the at least one optical generator and modulator provides opto-electronic conversion. The transmitter 200 may comprise multiple modulators 220-1, 220-2... 220-n configured to modulate multiple optical signals 215-1, 215-2... 215-n corresponding to different wavelengths λ_{1,} λ_{2...} λₙ, or different wavelength ranges.

The transmitter 200 further includes a multiplexer 230, configured to combine the at least one optical signal 215 into a multiplexed optical signal 235. The multiplexer may achieve this by combining the individual optical signals contained in a series of individual fibre optic cables or through free space, combining these signals 215-1, 215-2... 215-n into a single co-linear beam. The multiplexer 230 may be non-diffractive, for example, a fibre coupler. The multiplexer 230 may be diffractive, for example, an arrayed waveguide grating. The use of a diffractive multiplexer is preferable since this approach reduces the loss of signal power.

The transmitter 200 may further include at least one power amplifier 240 configured to amplify the optical power of all the wavelengths combined within the multiplexed optical signal 235. This improves the power budget and reliability of a good link being formed, for example, by increasing the possible data rate in each channel or overcoming atmospheric losses. The power amplifier 240 may be an Erbium-Doped Fibre Amplifier (EDFA) or Ytterbium-Doped Fibre Amplifier (YDFA). Those skilled in the art will appreciate that another type of suitable amplifier may be employed to achieve the same or a substantially similar result. The suitability of an amplifier may depend on the specific wavelengths λ_{1,} λ_{2...} λₙ of the at least one optical signal 215 generated by the optical signal generator 210. An EDFA may have a bandwidth of at least 30 nm, thereby allowing many channels to be simultaneously amplified. Alternatively, the power amplifier 240 may be a non-fibre amplifier.

The transmitter 200 may further include at least one optical element 250. The at least one optical element 250 may comprise a lens, or a series of lenses, however, those skilled in the art will appreciate that various other optical elements may be employed to achieve the same or a substantially similar result. The optical element 250 is configured to condition and direct the multiplexed optical signal 235 such that the signal is directed toward the receiver 300. Said optical elements 250 may direct the multiplexed optical signal 235 mechanically, for example, by the manipulation of mirrors. The at least one optical element 250 may further ensure that the multiplexed optical signal has a low divergence. Ideally, the divergence of the multiplexed optical signal 235 will be sufficiently small such that as much light as possible is collected by the receiver 300.

The transmitter 200 may further include a window 260 configured to protect the apparatus from the external environment.

The at least one optical signal 215 and multiplexed optical signal 235 may be communicated between components of the transmitter 200 with optical fibres to make alignment of the components simpler. The at least one optical signal 215 and multiplexed optical signal 235 may alternatively be communicated between components of the transmitter 200 via free space optics.

Figure 3 is a block diagram of a receiver apparatus 300. The receiver 300 is configured to receive an optical signal 150, 160, 170, 180. The optical signal 150, 160, 170, 180 may be a multiplexed optical signal.

The receiver 300 comprises a de-multiplexer 330, configured to separate the multiplexed optical signal 390 into at least one optical signal 335. The de-multiplexer may achieve this by separating the individual optical signals into a series of individual fibre optic cables or free space. The de-multiplexer 330 may be non-diffractive, for example, a fibre coupler. Non-diffractive separation means may require the use of filtering to ensure correct separation of each of the different wavelengths λ_{1,} λ_{2...} λₙ. The de-multiplexer 330 may be diffractive, for example, an arrayed waveguide grating. The use of a diffractive multiplexer is preferable since this approach reduces the loss of signal power.

The receiver 300 further includes an opto-electronic converter 370 configured to convert the at least one optical signal 335 into at least one electronic signal. The opto-electronic converter may be a photodiode or photomultiplier tube. Those skilled in the art will appreciate that various other components may be employed to achieve the same or a substantially similar result. The receiver 300 may comprise multiple opto-electronic convertors 370-1, 370-2... 370-n configured to convert separated optical signals 335 at different wavelengths λ₁, λ_{2...} λₙ, or different wavelength ranges.

The receiver 300 further includes a de-modulator 320 configured to demodulate the at least one converted optical signal into at least one data output signal 380. The de-modulator 320 may decode the at least one converted signal to allow onward digital processing of the data or information included therein. The receiver 300 may comprise multiple de-modulators 320-1, 320-2...320-n configured to de-modulate electrical signals obtained from different wavelengths λ_{1,} λ_{2...} λₙ, or different wavelength ranges. The multiple de-modulators may be configured to de-modulate the electrical signals to provide multiple data output signals 380-1, 380-2... 380-n.

The receiver 300 may further include at least one optical element 350. The at least one optical element 350 may comprise a lens or a series of lenses. Those skilled in the art will appreciate that various other optical elements may be employed to achieve the same or a substantially similar result. The optical element 350 is configured to collect the multiplexed optical signal 235 light and condition it such that it is incident with the right geometry for downstream components. The at least one optical element 350 may further adjust the field of view of the receiver 350 such that it is directed towards the transmitter 200. This may be achieved by mechanical means, such as directly pointing the at least one optical element 350 towards the transmitter 200. The at least one optical element may comprise a telescope or arrangement of at least one mirror. The at least one optical element 350 may be configured to have a narrow field of view to reduce the amount of background light collected that would otherwise increase noise in the system. The at least one optical element 350 may be further configured to improve the focussing of the received signal and reduce signal loss.

The optical signal beam 150, 160, 170, 180 may be pointed in the general direction of a receiver 300 within a critical tolerance. However, perfect alignment of the transmitter 200 and receiver 300 may not be essential for effective communication, since the various media (air and/or water) causes the signal beam to scatter, thereby spreading it.

The receiver 300 may further include at least one pre-amplifier 340 configured to amplify the optical power of the received multiplexed optical signal 390. The pre-amplifier may increase the power across all the wavelengths comprised by the multiplexed optical signal 390. Amplification of this signal improves the power budget to achieve a higher signal-to-noise ratio may increase the possible data reach and data rate in each channel and may compensate for atmospheric losses. The pre-amplifier 340 may be an Erbium-Doped Fibre Amplifier (EDFA) or Ytterbium-Doped Fibre Amplifier (YDFA). An EDFA may have a bandwidth in excess of 30 nm allowing many channels to be simultaneously amplified. Those skilled in the art will appreciate that another type of suitable amplifier may be employed to achieve the same or a substantially similar result. Alternatively, the power amplifier 340 may be a non-fibre amplifier.

The receiver 300 may further include at least one filter element configured to filter light according to a specific wavelength λ_{1,} λ_{2...} λₙ or wavelength band. The filter element may be configured to prevent crosstalk or interference between the de-multiplexed configured at least one optical signal 335.

The receiver 300 may further include a window configured to protect the system from the external environment.

The at least one optical signal 335 and multiplexed optical signal 390 may be communicated between components of the receiver 300 with optical fibres to make alignment of the components simpler. The at least one optical signal 390 and multiplexed optical signal 335 may alternatively be communicated between components of the receiver 300 via free space optics.

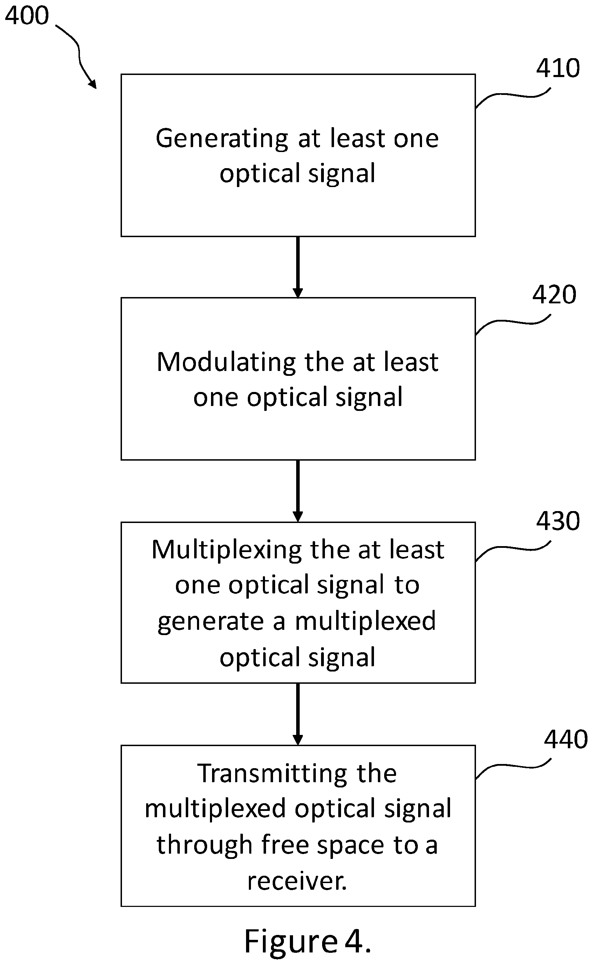

Figure 4 shows a block diagram illustrating a method 400 of transmitting an optical signal. Transmission of the optical signal may be achieved using a transmitter 200. The signal may be transmitted from a transmitter 200 to a receiver 300 along an optical signal path. At least a portion of the optical signal path comprises a liquid medium. The transmitter 200 may be coupled to an aircraft 110, and the receiver 300 may be coupled to a submarine 130. In another example, the transmitter 200 may be coupled to a submarine 130, and the receiver 300 may be coupled to an aircraft 110.

The method 400 comprises the step of generating at least one optical signal 410. In cases where more than one optical signal 215-1, 215-2... 215-n is generated, each optical signal 215 may comprise a different wavelength λ_{1,} λ_{2...} λₙ, wherein each wavelength λ_{1,} λ_{2...} λₙ is separated by an appropriate bandwidth to prevent crosstalk or unwanted interference. Generation of the optical signal may be achieved using an optical signal generator 210. The optical signal generator 210 may be a laser generator configured to generate at least one laser signal. In cases where there is more than one laser signal generated, each laser signal may comprise a different wavelength λ_{1,} λ_{2...} λₙ, wherein each wavelength λ_{1,} λ_{2...} λₙ is separated by an appropriate bandwidth to prevent crosstalk or unwanted interference. The at least one laser signal may be an infrared laser signal with a wavelength substantially between 300 nm to 10 µm, more preferably 300 nm to 600 nm for signal transfer through water. Multiple optical signal generators 210-1, 210-2... 210-n may be configured to provide optical signals 215-1, 215-2... 215-n with different wavelengths λ_{1,} λ_{2...} λₙ or different wavelength ranges. The wavelengths used may be based on a number of factors, including wavelength range, stability, power, coherence length, coherence time, and the like. The at least one laser signal may have a wavelength between 300 nm and 10 µm, more preferably 300 nm to 600 nm for signal transfer through water.

The method 400 further comprises the step of modulating the at least one optical signal 420. The modulation applied may be one of an on-off keying format wherein the power of the at least one optical signal is blocked or allowed to pass to present a 0 or a 1, or vice versa. Those skilled in the art will appreciate that this is one example of a modulation technique and that various other techniques be employed to achieve the same or a substantially similar result. Other such examples may include pulse position modulation and phase modulation. Modulation may be applied directly to the least one optical signal directly, for example, by modulating the current of the at least one optical signal generator. Modulation may be applied to the at least one optical signal indirectly, for example, by transmission through an opto-electronic element such as a lithium niobate interferometer. The combination of the at least one optical generator and modulator provides opto-electronic conversion. The optical signal generator and modulator 220 may be encompassed in a single device configured to produce at least one modulated optical signal 215. Modulation may be performed using multiple modulators 220-1, 220-2... 220-n configured to modulate multiple optical signals 215-1, 215-2... 215-n corresponding to different wavelengths λ_{1,} λ_{2...} λₙ, or different wavelength ranges.

The method 400 further comprises the step of multiplexing the at least one optical signal to generate a multiplexed optical signal 430. Multiplexing involves combining the at least one optical signal 215 into a multiplexed optical signal 235. This may be achieved by combining the individual optical signals contained in a series of individual fibre optic cables or in free space, combining these signals 215-1, 215-2... 215-n into a single co-linear beam. Multiplexing may be achieved using non-diffractive means, for example, by using a fibre coupler. Alternatively, multiplexing may be achieved using diffractive means, for example, by using an arrayed waveguide grating. The use of a diffractive multiplexer is preferable since this approach reduces the loss of signal power.

The method 400 further comprises the step of transmitting the multiplexed optical signal along a path wherein at least a portion of the path comprises a liquid medium.

The method 400 may further comprise the step of conditioning and directing the multiplexed optical signal. This may be achieved using at least one optical element 250. The at least one optical element 250 may comprise a lens or a series of lenses. Those skilled in the art will appreciate that various other optical elements may be employed to achieve the same or a substantially similar result. This step may condition and direct the multiplexed optical signal 235 such that the signal is directed to a receiver 300 or ground station 150. This process of conditioning and directing the multiplexed optical signal 235 may ensure that the signal has a low divergence. Ideally, the divergence of the multiplexed optical signal 235 will be sufficiently small such that as much light as possible is collected by the receiver 300.

The method 400 may further comprise the step of amplifying the power of the multiplexed optical signal 235. Amplification may be applied to all the wavelengths combined in the multiplexed optical signal 235. Amplification may be applied to each wavelength λ_{1,} λ_{2...} λₙ separately. Amplification may improve the power budget and reliability of a good link being formed, for example, by increasing the possible data rate in each channel or overcoming atmospheric losses. Amplification may be performed using an Erbium-Doped Fibre Amplifier (EDFA) or Ytterbium-Doped Fibre Amplifier (YDFA). Those skilled in the art will appreciate that another type of suitable amplifier may be employed to achieve the same or a substantially similar result. The suitability of an amplifier may depend on the specific wavelengths of the at least one optical signal 215 generated by the optical signal generator 210. An EDFA may have a bandwidth in excess of 30 nm allowing many channels to be simultaneously amplified. Alternatively, the amplification may be achieved using a non-fibre amplifier.

The method 400 may further comprise the step of modifying the optical signal prior to transmission to account for at least one of the turbidity, salinity, and temperature of the liquid medium. The skilled person will appreciate that other conditions may also be accounted for. The method 400 may further comprise the step of modifying the optical signal prior to transmission to account for scattering effects at an air-water interface 120.

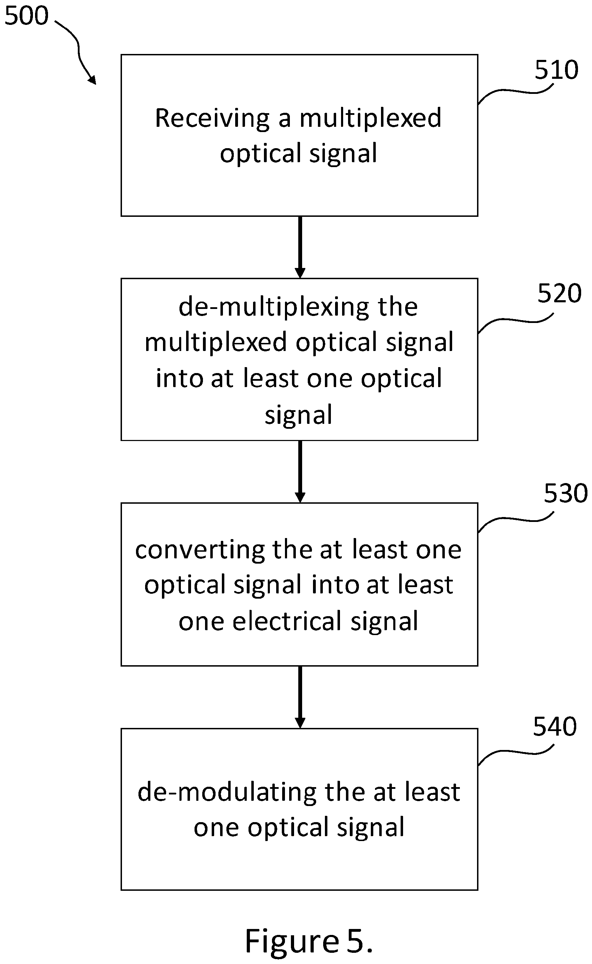

Figure 5 shows a block diagram illustrating a method 500 of receiving an optical signal. The method 500 comprises the step of receiving 510 a multiplexed optical signal 390. Receiving of the optical signal may be achieved using a receiver 300. The receiver 300 may be configured to receive a signal transmitted by a transmitter 200. The signal may be transmitted from a transmitter 200 to a receiver 300 along an optical signal path. At least a portion of the optical signal path comprises a liquid medium. The receiver 300 may be coupled to an aircraft 110, and the transmitter 200 may be coupled to a submarine 130. In another example, the receiver 300 may be coupled to a submarine 130, and the transmitter 200 may be coupled to an aircraft 110.

The method 500 further comprises the step of de-multiplexing 520 the multiplexed optical signal 390 into at least one optical signal 335. De-multiplexing involves separating the multiplexed optical signal 390 into separate optical signals 335-1, 335-2... 335-n. This may be achieved by separating at least one optical signal 335 into a series of individual fibre optic cables or free space. De-multiplexing may be achieved using non-diffractive means, for example, by using a fibre coupler. Alternatively, de-multiplexing may be achieved using diffractive means, for example, by using an arrayed waveguide grating. The use of a diffractive multiplexer is preferable since this approach reduces the loss of signal power.

The method 500 further comprises the step of converting 530 the at least one optical signal 335 into at least one electrical signal. Conversion of the at least one optical signal 335 into at least one electrical signal may be performed by an opto-electronic converter 370. The opto-electronic converter may be a photodiode or photomultiplier tube. Those skilled in the art will appreciate that various other components may be employed to achieve the same or a substantially similar result. Multiple opto-electronic convertors 370-1, 370-2... 370-n may be configured to convert the at least one optical signal 335 at different wavelengths λ_{1,} λ_{2...} λₙ, or different wavelength ranges.

The method 500 further comprises de-modulating 540 the at least one electrical signal. De-modulation may be performed using a de-modulator 320. De-modulation may involve decoding the at least one electrical signal to allow onward digital processing of the data or information included therein. Multiple de-modulators 320-1, 320-2... 320-n may be configured to de-modulate electrical signals obtained from different wavelengths λ₁, λ_{2...} λₙ, or different wavelength ranges. The multiple de-modulators may be configured to de-modulate the electrical signals to provide multiple data output signals 380-1, 380-2... 380-n.

The method 500 may further comprise the step of focusing the received multiplexed optical signal 390. This may be achieved using at least one optical element 350. The at least one optical element 350 may comprise a lens or a series of lenses. Those skilled in the art will appreciate that various other optical elements may be employed to achieve the same or a substantially similar result. This step may focus the received multiplexed optical signal 390 such that the signal is incident with the right geometry for downstream components. The at least one optical element 350 may adjust the field of view of the receiver 300 such that it is directed towards the transmitter 200. The at least one optical element 350 may be configured to have a narrow field of view to reduce the amount of background light collected that will increase noise in the system.

The method 500 may further comprise the step of amplifying the received multiplexed optical signal 390. This amplification may be applied to all the wavelengths combined in the multiplexed optical signal 390. Amplification improves the power budget and reliability of a good link being formed, for example, by increasing the possible data rate in each channel or overcoming atmospheric losses. Amplification may be performed using an Erbium-Doped Fibre Amplifier (EDFA) or Ytterbium-Doped Fibre Amplifier (YDFA). Those skilled in the art will appreciate that another type of suitable amplifier may be employed to achieve the same or a substantially similar result. The suitability of an amplifier may depend on the specific wavelengths of the at least one optical signal 215 generated by the optical signal generator 210 of the transmitter 200. An EDFA may have a bandwidth in excess of 30 nm allowing many channels to be simultaneously amplified. Alternatively, the amplification may be achieved using a non-fibre amplifier.

The method 500 may further comprise the step of filtering the at least one optical signal using an optical filter. The optical filter element may be configured to filter light according to a specific wavelength λ₁, λ_{2...} λₙ or wavelength band. The filter element may be configured to prevent crosstalk or interference between the de-multiplexed configured at least one optical signal.

The method 500 may further comprise the step of modifying the received optical signal 390 to account for at least one of the turbidity, salinity, and temperature of the liquid medium. The skilled person will appreciate that other conditions may also be accounted for. The method 500 may further comprise the step of modifying the received optical signal 390 to account for scattering effects at an air-water interface 120.

## Claims

1. An optical communication system (100), comprising:
a transmitter (200) comprising:
an optical signal generator (210), configured to generate at least one optical signal (215);
a modulator (220), configured to encode data onto the at least one optical signal (215);
a multiplexer (230), configured to combine the at least one optical signal (215) into a multiplexed optical signal (235); and
a receiver (300) comprising:
a de-multiplexer (330), configured to separate the received multiplexed optical signal (390) into at least one optical signal (335);
an opto-electronic element (370), configured to convert the at least one optical signal (335) into at least one electrical signal (380);
a de-modulator (320), configured to decode the at least one electrical signal (380),
wherein at least one of the transmitter (200) and receiver (300) is configured to be operated underwater.

2. The system (100) of claim 1, further comprising at least one submarine (130, 140).

3. The system (100) of claim 2, wherein the transmitter (200) is coupled to an at least one aircraft (110) and the receiver (300) is coupled to the at least one submarine (130, 140), and wherein the at least one aircraft (110) and at least one submarine (130, 140) are configured to be in optical communication with each other.

4. The system (100) of claim 2, wherein the transmitter (200) is coupled to the at least one submarine (130, 140) and the receiver (300) is coupled to an at least one aircraft (110), and wherein the at least one submarine (130, 140) and at least one aircraft (110) are configured to be in optical communication with each other.

5. The system (100) of claim 2, wherein an at least one aircraft (110) and the at least one submarine (130, 140) comprise both a transmitter (200) and a receiver (300), thereby allowing two-way optical communication.

6. The system (100) of any of claims 3-4, wherein the multiplexed optical signal is configured to break the air-water interface (120) upon transmission between the at least one aircraft (110) and at least one submarine (130, 140).

7. The system (100) of claim 2, comprising a first submarine (130) and a second submarine (140), wherein the first and second submarines (130, 140) each comprise a transmitter (200) and a receiver (300), wherein the first and second submarines (130, 140) are configured to be in optical communication with each other while submerged.

8. The system (100) of claim 7, wherein at least one of the first and second submarines (130, 140) comprises a drone, wherein the drone is configured to extend the range of optical communication between the first and second submarines (130, 140).

9. The system (100) any preceding claim, wherein the at least one optical signal (215) is an infrared laser signal with a wavelength substantially between 300 nm to 10 µm.

10. A method (400) of transmitting an optical signal along a path, wherein at least a portion of the path comprises a liquid medium, the method comprising:
generating at least one optical signal (410);
modulating the at least one optical signal (420);
multiplexing the at least one optical signal to generate a multiplexed optical signal (430); and
transmitting the multiplexed optical signal to a receiver (300) along a path wherein at least a portion of the path comprises a liquid medium (440).

11. The method (400) of claim 10, wherein the optical signal (235) is modified prior to transmission to account for at least one of the turbidity, salinity, temperature of the liquid medium.

12. The method (400) of claim 10, wherein the optical signal (235) is modified prior to transmission to account for scattering effects at an air-water interface (120).

13. A method (500) of receiving an optical signal (390) passed along a path wherein at least a portion of the path comprises a liquid medium, the method comprising:
receiving a multiplexed optical signal (510);
de-multiplexing the multiplexed optical signal into at least one optical signal (520);
converting the at least one optical signal into at least one electrical signal (530); and
de-modulating the at least one electrical signal (540).

14. The method (500) of claim 13, wherein received optical signal (390) is modified to account for at least one of the turbidity, salinity, temperature of the liquid medium.

15. The method of claim 13, wherein the received optical signal (390) is modified to account for scattering effects at an air-water interface (120).
